# EUROPEAN PATENT APPLICATION

(11) **EP 1 968 317 A1**
(43) Date of publication of application: **10.09.2008**
(21) Application number: 07720600.1
(22) Date of filing: 29.03.2007
(51) Int. Cl.: H04N 7/16, H04N 7/167, H04N 7/173

(54) **SYSTEM AND METHOD FOR REALIZING THE REAL TIME SCRAMBLING OF THE MEDIA DATA**

(30) Priority: 25.08.2006 CN 200610115148
(71) Applicant: Huawei Technologies Co., Ltd., Longgang District Shenzhen Guangdong 518129 (CN)
(72) Inventor: JI, Xiangyang, Guangdong 518129 (CN)
(74) Representative: Hengelhaupt, Jürgen
(86) International application number: PCT/CN2007/001026
(87) International publication number: WO 2008/025197

(57) **Abstract**

A method for scrambling media data in real time solves the problems of heavy load on related devices and high requirements on their performance when multiple scrambling components scramble the same media data and scrambling associated data need be generated for each scrambling component in the related art. The method includes: acquiring scrambling associated data including an ECM and sending it to scrambling components based on the media data to be scrambled, in which the multiple components that scramble the same media data share the same scrambling associated data; the scrambling components scramble media data by using the scrambling associated data. The invention also solves the problem of failure to effectively scramble programs demanded by subscribers in the VOD system in the related art. In addition, the invention discloses a system for scrambling media data.

## Description

### Field of the Invention

The present invention relates to the digital television field, and in particular, to a method and system for scrambling media data in real time.

### Background of the Invention

At present, a conditional access (CA) system is introduced to charge subscribers for the available services in the digital television services. This system works with a scrambler to scramble the media data of programs and multiplex entitlement management message (EMM) and entitlement control message (ECM) to the media data for output. After receiving the media data, the subscriber end descrambles the media data, restoring it to unscrambled streams.

In the related art, media data may be scrambled in the following two modes:

### Mode 1:

In this mode, media data is scrambled at the central office end generally, and the scrambled media data is sent to the set top box (STB) of a subscriber, where code streams are descrambled by using a smart card and restored to unscrambled streams.

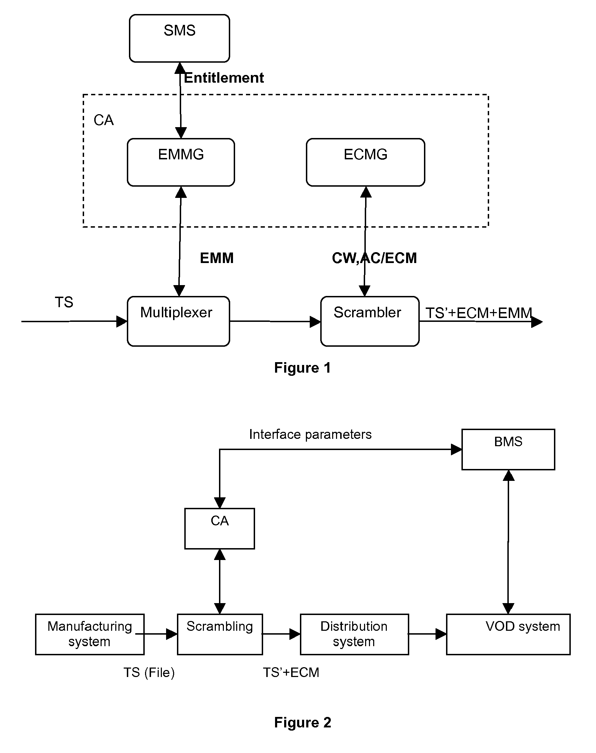

In Figure 1, scrambling media data in the related art covers the subscriber management system (SMS), CA system, multiplexer and scrambler, of which the CA system includes an entitlement management message generator (EMMG) and an entitlement control message generator (ECMG). A transport stream (TS) in the figure includes media data of multiple programs. When the media data in the TS need be scrambled, the scrambler initiates a request to the ECMG and sends the control word (CW) and access criteria (AC) to the ECMG. The ECMG generates an ECM based on the CW and AC and sends the ECM to the scrambler. In addition, the SMS sends subscriber entitlement information to the EMMG. The EMMG then generates an EMM based on the information, information of programs and program entitlement information, and sends the EMM to the multiplexer. The scrambler and the multiplexer multiplex the ECM and the EMM to the scrambled media data for output. The scrambler and the multiplexer may be integrated in a device.

In the preceding mode, scrambling media data once requires one ECM, which results in a large amount of media data to be scrambled in the whole network. For example, a community is a sub-headend, and a lot of media data need be scrambled when the media data of programs from satellites need be scrambled in communities. If there are 500 communities and 10 programs per community, the CA system support scrambling 5000 (=500*10) programs.

For the preceding networking and services, the number of programs to be scrambled will be large, which poses a high requirement for the performance of the CA system. The related art and many mature systems are cost-effective in supporting scrambling less than 200 programs. To support scrambling a large number of programs, the system capacity be greatly expanded. As a result, the investment of subscribers in the CA system will rise sharply.

### Mode 2:

With the launch of services such as video on demand (VOD), contents be protected to ensure the interest of operators. In a traditional mode, when a subscriber demands a program once, the media data of the program be scrambled once. If 10,000 subscribers demand programs at the same time, the CA system generate data required for scrambling 10,000 programs and scramble the programs by the time segments in which the programs are demanded (that is, scrambling starts when a program is demanded and stops after the program is played). Scrambling by time segments requires that the CA system can receive a request from the scrambler, generate an ECM and send it to the scrambler when scrambling starts, and can stop processing, but should not generate an alarm, when scrambling stops. For example, the existing CA system configures scrambled programs in it so that the CA system reports an error when the scrambler disconnects from the ECMG. In this case, the system cannot support scrambling by time segments.

In the VOD service, subscribers may demand a large number of programs, many of which are the same, and each program demanded need be scrambled by time segments. Therefore, a solution is put forward, that is, the media data of programs is directly scrambled and stored, and it is played directly on demand without being scrambled. The solution is also called "pre-encryption" solution.

Figure 2 is the schematic diagram of scrambling media data in the pre-encryption mode.

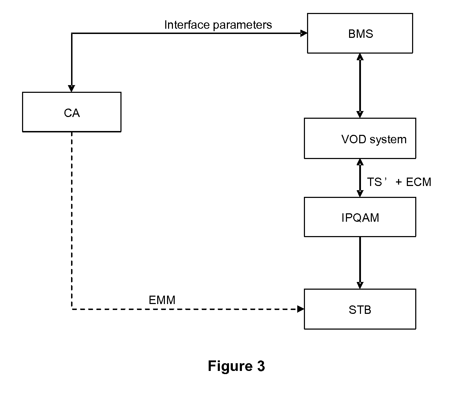

The media data in the manufacturing system is scrambled in advance, and interface parameters, which can be Service ID and Service Key (SK) are sent to the business management system (BMS) via the CA system. In addition, the scrambled media data and the ECM are saved in the VOD system via a distribution system. When a subscriber demands a program, the VOD system directly outputs the scrambled media data. Figure 3 shows all processing units involved when a subscriber demands a program. When a subscriber demands a program, the STP at the subscriber side sends a request. The VOD system directly sends the scrambled media data and the ECM. The EMM is sent separately or inserted in an IP to Quadrature Amplitude Modulator (IPQAM) for sending. The STB descrambles the scrambled media data based on the EMM and ECM to restore it to unscrambled streams.

In the process of the implementing the technical solution of mode 2, the inventor finds that the stored contents after being scrambled in an area may not be descrambled in another area, because the programs are stored at the headend by scrambling, and the CA systems in different areas are different. In an existing broadcast network, two CA systems are often used to perform encryption at the same time. If the pre-encryption solution is adopted, not both of the CA systems support pre-encryption. Therefore, this solution makes it difficult to be compatible with the prior system. Besides, the CA systems running on the current network have many subscribers. It is difficult for the pre-encryption solution to support simultaneous encryption. In this case, many STBs running on the network will be incompatible.

### Summary of the Invention

An embodiment of the present invention provides a method and system for scrambling media data to solve the problems of heavy load on related devices and high requirements on their performance when multiple scrambling components scramble the same media data and scrambling associated data need to be generated for each scrambling component at present The method and system further solve the problem of failure to effectively scramble programs demanded by subscribers in the VOD system at present.

A method for scrambling media data in real time includes:
acquiring scrambling associated data including an ECM and sending it to scrambling components based on the media data to be scrambled, in which the multiple components that scramble the same media data share the same associated data; and
scrambling, by the scrambling components, media data in real time by using the scrambling associated data.

An apparatus for providing scrambling associated data includes:
a communication unit, adapted to receive the information related to the media data to be scrambled and send scrambling associated data;
a processing unit, adapted to generate an ECM according to the information related to the media data, or acquire an ECM from other apparatuses and generate scrambling associated data based on the ECM and the information related to media data; and
a first judging unit , adapted to notify the communication unit to send the associated data to the scrambling components when determining that multiple scrambling components scramble the media data.

An apparatus for distributing scrambling associated data includes:
a receiving unit, adapted to receive the scrambling associated data of media data;
a replicating unit, adapted to replicate the associated data after determining that multiple scrambling components scramble the media data; and
a forwarding unit, adapted to send the scrambling associated data to the corresponding scrambling components.

A system for scrambling media data includes:
scrambling components, adapted to scramble media data based on the scrambling associated data, which includes at least the ECM of the media data;
an ECMG, adapted to generate a corresponding ECM based on media data; and
a scrambling agent, adapted to acquire a corresponding ECM from the ECMG based on the media data to be scrambled and send the scrambling associated data including the ECM to the scrambling components, in which the same associated data is sent to the multiple scrambling components that scramble the same media data.

With the technical solution provided in an embodiment of the present invention, the same scrambling associated data is generated for the same media data to be scrambled, which effectively reduces the load on the ECMG. By using the apparatus for distributing data or the scrambling agent, media data can be scrambled by the time segments in which the media data is to be scrambled, which ensures compatibility with the CA system in the prior system.

### Brief Description of the Drawings

Figure 1 shows the schematic diagram for scrambling media data in mode 1 in the related art;
Figure 2 shows the schematic diagram for scrambling media data in mode 2 in the related art;
Figure 3 shows all processing units involved when a subscriber demands a program in mode 2 in the related art;
Figure 4A and Figure 4B show the apparatus for providing scrambling associated data in an embodiment of the present invention;
Figure 5 shows the apparatus for distributing data provided in an embodiment of the present invention;
Figure 6 shows the side for scrambling media data provided in an embodiment of the present invention;
Figure 7 shows the system structure in the embodiment 1 of the present invention;
Figure 8 shows the flowchart for scrambling media data in the embodiment lof the present invention;
Figure 9 shows the system structure in the embodiment 2of the present invention; and
Figure 10 shows the flowchart for scrambling media data in the embodiment 2 of the present invention.

### Detailed Description of the Invention

In an embodiment of the present invention, the same scrambling associated data is used for the multiple scrambling components that scramble the same media data. When generating or acquiring the scrambling associated data of the media data from the stored scrambling associated data and determining that multiple scrambling components scramble the media data, the system sends the same associated data to the scrambling components. In the embodiment of the present invention, an ECMG provides scrambling associated data for subscribers, or an ECMG and a scrambling agent provide scrambling associated data for scrambling components.

The media data includes media streams and media files of programs. A scrambling associated data includes at least an ECM, and may also include CW, AC and/or Service ID and scrambling time segments.

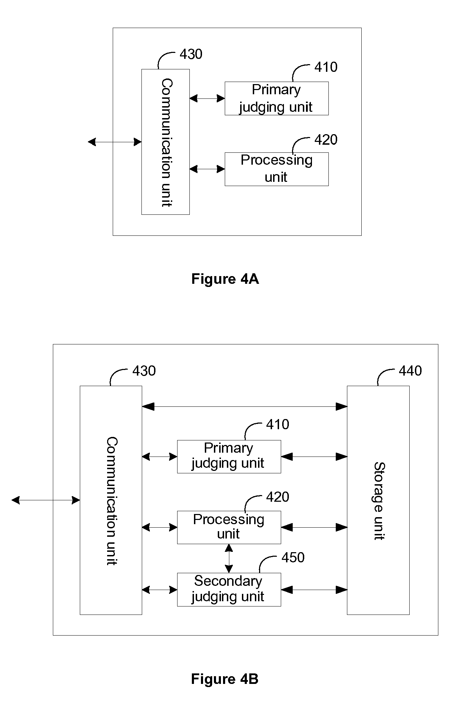

As shown in Figure 4A, an apparatus for providing scrambling associated data in an embodiment of the present invention includes a first judging unit 410, a processing unit 420 and a communication unit 430. The communication unit 430 communicates with other devices, for example, the communication unit 430 receives the information related to the media data to be scrambled and sends scrambling associated data. The first judging unit 410 determines whether there are multiple scrambling components that scramble the same media data. The processing unit 420 generates an ECM based on the information related to media data, or acquires an ECM from other apparatuses and generates scrambling associated data based on the ECM and the information related to the media data. After determining that there are multiple scrambling components that scramble the same media data, the first judging unit 410 notifies the communication unit 430 to send the same associated data to multiple scrambling components. The information related to media data may be Service ID, CW, AC and/or scrambling time segments.

Figure 4B shows another apparatus for providing scrambling associated data in an embodiment of the present invention. The apparatus is equipped with a storage unit 440 and a secondary judging unit 450 based on the apparatus shown Figure 4A. The storage unit 440 stores scrambling associated data and other related information. The secondary judging unit 450 determines whether the storage unit 440 has corresponding scrambling associated data based on the information related to the media data to be scrambled; if the storage unit 440 has the corresponding scrambling associated data, the secondary judging unit 450 directly sends the scrambling associated data to the communication unit 430; otherwise, the secondary judging unit 450 notifies the processing unit 420 to generate scrambling associated data. In practice, the first judging unit 410 and the secondary judging unit 450 may be independent units or a same unit.

The apparatuses shown in Figure 4A and Figure 4B may be realized by adding functional units to the existing ECMG, or they may be an independent scrambling agent.

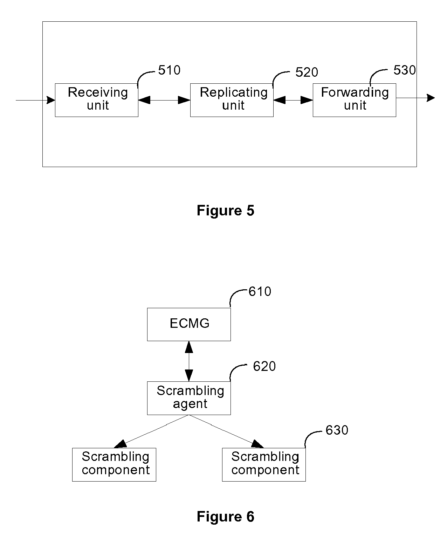

When the amount of media data to be scrambled in the system is large, an apparatus for distributing data may be added to forward the scrambling associated data to scrambling components. As shown in Figure 5, the apparatus for distributing data includes a receiving unit 510, a replicating unit 520 and a forwarding unit 530. The receiving unit 510 receives the scrambling associated data sent by the apparatus for providing scrambling associated data. The replicating unit 520 determines whether multiple scrambling components scramble the media data; if yes, it replicates the associated data. The forwarding unit 530 sends the scrambling associated data to one or more than one scrambling component. If the scrambling associated data includes the time segments in which the scrambling components scramble media data, the forwarding unit 530 sends the scrambling associated data to the scrambling components within the time segments and notifies the scrambling components to start or stop scrambling media data based on the time segments, or directly sends the time segments to the scrambling components, and the scrambling components control starting or stopping scrambling media data. When the scrambling components stop scrambling media data, the connections between the apparatus for distributing data and the scrambling components may be released directly and the connection between the scrambling agent and the ECMG may be released according to the configuration of the CA system. If the CA system scrambles programs by using static configuration, once the connection is released, the CA system keeps sending an alarm, and the connection between the scrambling agent and the ECMG in the CA system remains unchanged; when the CA system need not maintain the connection continuously, the connection between the scrambling agent and the ECMG in the CA system may be released.

As shown in Figure 6, the side for scrambling media data includes an ECMG 610, a scrambling agent 620 and a scrambling component 630.

The ECMG 610 generates an ECM based on the AC and CW sent by the scrambling agent 620. The scrambling agent 620 acquires the AC, CW and ECM of the media data based on the Service ID of media data to be scrambled and sends the scrambling associated data including the AC, CW and ECM to the scrambling component 630. The scrambling component 630 scrambles media data based on the CW in the scrambling associated data and multiplexes the ECM of the CW to the media data. The apparatus for distributing data and the scrambling component comply with a simulcrypt[hl] protocol or a user-defined proprietary protocol.

The scrambling agent sends scrambling associated data including the AC, CW and ECM to scrambling components. The scrambling associated data may be transmitted after being encrypted, or a piece of the scrambling associated data may be transmitted after encryption and other data is transmitted directly, or the scrambling associated data may be transmitted in plain text.

When there is a large amount of media data to be scrambled in the system, an apparatus for distributing data may be added at the side for scrambling media data in an embodiment of the present invention. The scrambling agent sends the scrambling associated data to each apparatus for distributing data, and the apparatuses for distributing data send the data to the corresponding scrambling components. The scrambling agent may preset distribution of scrambling associated data of media data for each apparatus for distributing data in a local system. The scrambling agent sends the scrambling associated data based on the Service ID of media data to the apparatuses for distributing data that correspond to the scrambling components requiring the scrambling associated data. The apparatuses send the scrambling associated data to the scrambling components; or the scrambling agent sends the scrambling associated data to the apparatuses for distributing data, and the apparatuses for distributing data send the data to the corresponding scrambling components based on the Service ID of media data.

To be compatible with the existing system and to avoid the impact on the existing system, in an embodiment of the present invention, an EMMG may be used separately (which can separate the EMM of the prior broadcast service for the VOD service particularly). The EMM output by the EMMG is broadcast to all scrambling components supporting multiplexing, which multiplex the EMM to all media data; or the EMM may be sent to the STBs of subscribers separately.

Depending on different application scenarios, the scrambling agent may choose to store or not to store the CW, AC and ECM. In a network with multiple sub-nodes, the media data of programs at each node is scrambled by using static configuration; the programs of all sub-nodes are broadcast synchronously; the time sequences of all sub-nodes are the same, and the scrambling agent need not synchronize the time sequences. In this case, the data such as the CW, AC and ECM need not be stored. For the VOD service, even if multiple subscribers demand a same program, different program streams are generated, and need to be scrambled. Besides, the demand time of subscribers may not be the same, which result in different time sequences for scrambling different programs. In this case, the scrambling agent may choose to store the CW, AC and ECM. The following describes the above scenarios based on embodiments:

### Embodiment 1:

This embodiment describes a scenario in which multiple sub-nodes are deployed in a network.

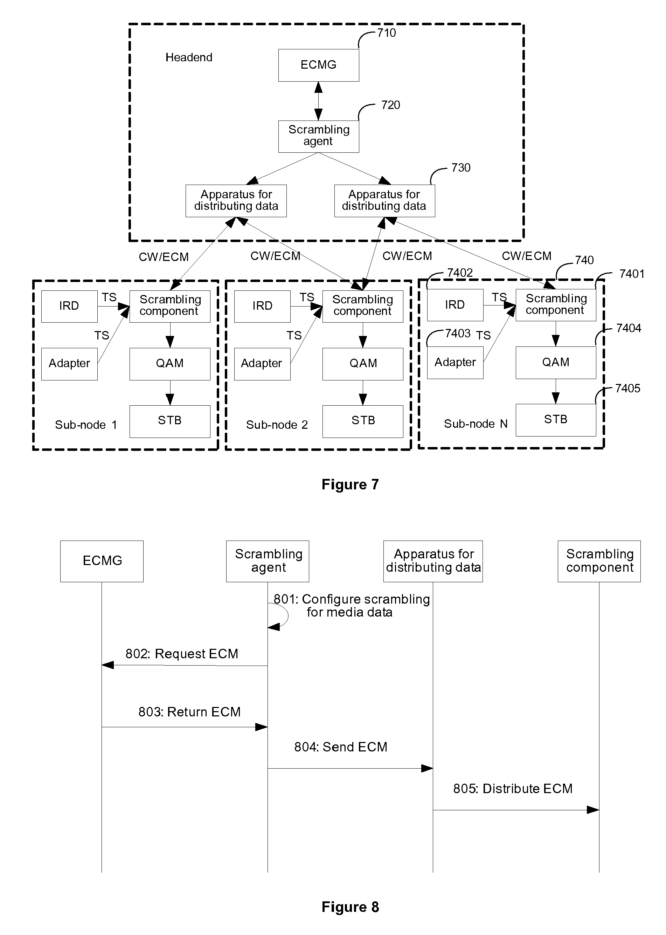

As shown in Figure 7, the system provided in this embodiment includes a ECMG 710, a scrambling agent 720, apparatuses 730 for distributing multiple data and multiple sub-nodes 740, of which each sub-node includes a scrambling component 7401, an IRD 7402, an adapter 7403, a QAM 7404 and an STB 7405.

The scrambling agent 720 is adapted to configure scrambling for media data, acquires the AC of the media data, generates the CW, acquires the ECM from the ECMG 710 and sends the ECM, CW, AC and Service ID to the apparatus 730 for distributing data. The apparatus 730 for distributing multiple data sends the ECM and CW to the scrambling component 7401 according to the configuration of the sub-node 740. The scrambling component 7401 scrambles the media data sent by the IRD 7402 and the adapter 7403 based on the CW, multiplexes the ECM to the scrambled media data and sends the scrambled media data to the STB 7405 via the QAM 7404. The STB 7405 descrambles the media data and restores it to unscrambled streams.

The scrambling agent 720 is adapted to configure scrambling based on media data directly when receiving the AC, or the AC may be generated by an access control generator (ACG). The ACG may serve as a module in the scrambling agent; the ACG may also serve as an independent module or a module in other components, generate the AC and send it to the scrambling component 720 over the interface with the scrambling agent 720.

As shown in Figure 8, the process of scrambling media data in this embodiment is as follows:
Step 801: The scrambling agent configures scrambling for media data and the AC of the media data.
Step 802: The scrambling agent generates the CW for the media data and sends the CW and AC of the media data to the ECMG, requesting an ECM from the ECMG.
Step 803: The ECMG returns the ECM to the scrambling agent.
Step 804: The scrambling agent sends the ECM, AC, CW and Service ID to the apparatuses for distributing data based on the configuration of the apparatuses.
Step 805: The apparatuses for distributing data send the received ECM and CW to the scrambling components based on the Service ID.

Upon receiving the ECM and CW, the scrambling components scramble the media data by using the CW and multiplex the ECM to the media data for output.

The following further describes the embodiment 1 through a specific application example.

For example, a system includes three sub-nodes: a sub-node 1, a sub-node 2 and a sub-node 3, and apparatuses 1 and 2 for distributing data. Suppose media data 1-5 need to be scrambled on the sub-node 1, media data 2-6 need to be scrambled on the sub-node 2, and media data 6-10 need be scrambled on the sub-node 3. In the scrambling agent, configure the apparatus 1 to distribute the scrambling associated data including the ECM and CW of the media data 1-5 to the corresponding sub-nodes, and configure the apparatus 2 to distribute the scrambling associated data including the ECM and CW of the media data 6-10 to the corresponding sub-nodes. In the scrambling agent, start scrambling media data, configure the AC corresponding to media data 1-10, generate the corresponding CW and send the AC and CW to the ECMG to request the corresponding ECM. Upon receiving the ECM returned by the ECMG, the scrambling agent sends the CW, ECM and Service ID of the media data 1-5 to apparatus 1 for distributing data and the CW, ECM and Service ID of the media data 6-10 to the apparatus 2 for distributing data.

Based on the received Service ID, the apparatus 1 for distributing data associates media data 1 with the sub-node 1, and media data 2-5 with the sub-nodes 1 and 2, and sends the CW and ECM of media data 1 to the scrambling component of the sub-node 1 and the CW and ECM of media data 2-5 to the scrambling components of the sub-nodes 1 and 2. Based on the received Service ID, the apparatus 2 for distributing data associates media data 6 with the sub-nodes 2 and 3 and media data 7-10 with the sub-node 3, and sends the CW and ECM of media data 6 to the scrambling components of the sub-nodes 2 and 3 and the CW and ECM of media data 7-10 to the scrambling component of the sub-node 3.

Upon acquiring the CW and ECM, the scrambling components of the sub-nodes scramble the media data by using the CW and multiplex the ECM to the corresponding media data for output to complete scrambling the media data.

The apparatuses for distributing data in this embodiment are deployed for a network with large capacity. When a network has small capacity, the scrambling agent may directly distribute data.

In the preceding application example, 15 programs (1-5, 2-6, and 6-10) are scrambled in total, and the ECMG processes the scrambled programs of media data 1-10, which reduces the load on the ECMG. In case there are a lot of sub-nodes and many programs are the same, this will greatly lower the requirement on the performance of the ECMG.

### Embodiment 2:

This embodiment describes the application of the technical solution provided in an embodiment of the present invention in the VOD service.

In an on-demand service such as VOD, after a subscriber starts demanding a program, the VOD system sends the media data or the media file of the program to the IPQAM and sends the subscriber demand information to the scrambling agent. The scrambling agent acquires the ECM from the ECMG, stores the CW, ECM, AC and Service ID and sends the scrambling associated data including the CW, ECM, AC and Service ID to the corresponding apparatus for distributing data. The apparatus for distributing data sends the scrambling associated data such as the CW and ECM to the IPQAM. The IPQAM scrambles the media data.

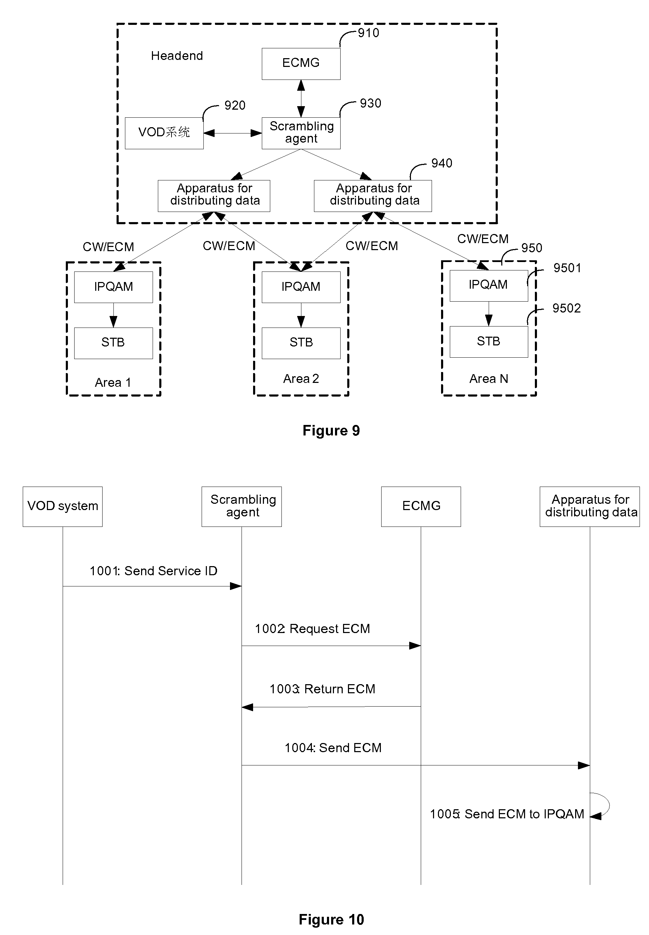

As shown in Figure 9, the system in this embodiment includes a ECMG 910, a VOD system 920, a scrambling agent 930, apparatuses 940 for distributing multiple data and several areas 950, of which each area includes an IPQAM 9501 and an STB 9502.

The VOD system 920 sends data such as the Service ID of programs demanded by subscribers and the time segments in which programs are to be scrambled to the scrambling agent 930 and sends the media data to the IPQAM 9501 in the area 950. The scrambling agent 930 generates the CW and AC and requests the ECM from the ECMG 910. After acquiring the ECM, the scrambling agent 930 stores the CW, AC, ECM, Service ID and the scrambling time segments and sends these data to apparatus 940 for distributing data, according to the configuration. The apparatus 940 for distributing data sends the CW and ECM to the IPQAM 9501. The IPQAM 9501 starts scrambling by using the received CW, multiplexes the ECM of the CW to the scrambled media data and sends the scrambled media data to the STB 9502.

As shown in Figure 10, the process of scrambling media data in this embodiment is as follows:
Step 1001: When a subscriber demands a program in the VOD system, the VOD system sends data such as the Service ID of the demanded program and the time segment in which the program is to be scrambled to the scrambling agent.
Step 1002: Upon receiving the data, the scrambling agent generates the CW and AC and sends them to the ECMG to request the ECM.
Step 1003: The ECMG returns the ECM to the scrambling agent.
Step 1004: The scrambling agent stores the received ECM and the CW, AC and Service ID corresponding to the ECM and sends the scrambling associated data such as the ECM, AC, CW, scrambling time segment and Service ID to the corresponding apparatus for distributing data according to the configurations of the apparatus.
Step 1005: The apparatus for distributing data sends the received ECM and the CW to the corresponding IPQAM based on the Service ID in the scrambling associated data.

Upon acquiring the CW and ECM, the IPQAM scrambles the media data of the program by using the CW and multiplexes the ECM to the media data for output to complete scrambling the media data.

In this embodiment, during scrambling the media data of a program by time segments, the apparatus for distributing data stores the setting of the time segments in which the media data is to be scrambled and sends the scrambling associated data to the scrambling components based on the time segments; or the scrambling agent or apparatus for distributing data notifies the scrambling components to start scrambling according to the setting of the time segments,, and when the scrambling ends, the scrambling agent or apparatus for distributing data notifies the scrambling components to stop scrambling.

With the method provided in this embodiment, when other subscribers demand a same program, the scrambling agent, which stores the scrambling associated data such as the ECM, AC, CW and Service ID of programs demanded by subscribers, queries the corresponding scrambling associated data such as the CW, AC and ECM according to the Service ID of the program and sends the scrambling associated data to the apparatus for distributing data, without requesting data from the ECMG.

The following further describes the embodiment 2 through a specific application example.

For example, the system provided in this embodiment includes areas 1 and 2, and apparatuses 1 and 2 for distributing data. In the scrambling agent, the apparatus 1 for distributing data is configured to send the ECM and CW of the media data of programs 1 -5 to the corresponding areas, and the apparatus 2 for distributing data is configured to send the ECM and CW of the media data of programs 7 -10 to the corresponding areas. When a subscriber in area 1 demands program 1 at 19:00, the VOD system sends the media data of the program to the IPQAM over the interface and sends the Service ID (1) and the scrambling time segment (19:00-21:00) to the scrambling agent over the interface with the scrambling agent. Upon acquiring the data, the scrambling agent starts scrambling, initiates a request for connection to the ECMG, generates the CW and AC and requests the ECM from the ECMG. After acquiring the ECM, the scrambling agent stores the scrambling associated data such as the CW, AC, ECM, Service ID and scrambling time segment and sends the scrambling associated data to apparatus 1 for distributing data based on the configuration of the apparatus. After acquiring the scrambling associated data, apparatus 1 for distributing data sends the scrambling associated data to the IPQAM in area 1. Upon acquiring the scrambling associated data such as the CW, AC, ECM and Service ID, the IPQAM scrambles the media data by using the CW and multiplexes the ECM to the scrambled media data. In this way, the media data of program 1 demanded in area 1 is scrambled.

Suppose a subscriber in area 2 demands program 1 again at 20:00. The VOD system sends the Service ID (1) and the scrambling time segment (20:00-22:00) to the scrambling agent. Upon acquiring the data, the scrambling agent does not request the ECM from the ECMG if the scrambling agent finds that the ECM of the media data of the program is available in the local system. The scrambling agent directly sends the stored scrambling associated data such as the AC, CW and ECM to apparatus 1 for distributing data.

The apparatus 1 for distributing data sends the scrambling associated data of the media data such as the CW, AC and ECM to the IPQAM in area 2 based on the Service ID.

Upon acquiring the scrambling associated data such as the CW, AC and ECM, the IPQAM in area 2 scrambles the media data by using the CW and multiplexes the ECM to the scrambled media data. In this way, the media data of program 1 demanded in area 2 is scrambled.

In application scenarios of the VOD system, when a subscriber demands a same program, the scrambling components, which store the scrambling associated data of media data such as the CW, AC and ECM, may reuse the scrambling associated data of the media data of the program, for example, the CW, AC and ECM. For example, after subscriber 1 demands program 1 at 18:00-20:00, scrambling the media data of program 1 starts. The scrambling components acquire a group of CW and ECM corresponding to the media data from the ECMG every 10 seconds and store the data in the local system. When subscriber 2 demands program 1 at 19:00-21:00, the scrambling components start scrambling the media data of the program demanded by subscriber 2 by using the CW and ECM acquired from 18:00 in the local system.

When the scrambling components do not store the scrambling associated data of media data such as the CW, AC and ECM, the scrambling associated data may also be reused. For example, after subscriber 1 demands program 1 at 18:00-20:00, scrambling the media data of program 1 starts. The scrambling components acquire a group of AC, CW and ECM corresponding to the media data from the ECMG every 10 seconds. When subscriber 2 demands program 1 at 19:00-21:00, the scrambling components directly scramble the media data of program 1 demanded by subscribers 1 and 2 corresponding to the scrambling associated data acquired at 19:00. After 20:00, the scrambling components stop scrambling the program demanded by subscriber 1, and the ECMG sends the scrambling associated data such as the CW, AC and ECM acquired after 20:00 to the scrambling components serving the program demanded by subscriber 2.

It can be seen from the preceding example that, for scrambling the media data of a same program demanded by two subscribers in different areas in different time segments, the scrambling agent requests data once from the ECMG. When many of the programs demanded by subscribers in the system are the same, the method provided in this embodiment not only supports scrambling the media data of the demanded programs by time segments but also effectively lowers the requirement on performance of the ECMG.

In this embodiment in which a scrambling agent is used, if the CA system scrambles programs by using static configuration and scrambling programs by time segments is not supported, use of the scrambling agent and continuous connection between the scrambling agent and the ECMG in the CA system not only support scrambling programs by time segments but also improve compatibility of the scrambling agent with the prior CA system.

With the scrambling method provided in the preceding embodiment, the same scrambling associated data is generated for the same media data to be scrambled, which effectively reduces the load on the ECMG. For specific applications, this embodiment provides multiple implementation modes. For example, a scrambling agent may be used to store the scrambling associated data of media data. When the scrambling associated data corresponding to the media data is available in the scrambling agent, the scrambling associated data may be used directly without the need to access the ECMG. Even if the ECMG is required to generate the ECM, the ECMG need process one CW and one ECM for the same media data in multiple scrambling components, which reduces the load on the ECMG and lowers the requirement on the performance of the ECMG. With the apparatus for distributing data or the scrambling agent provided in this embodiment, media data may be scrambled by the time segments in which the media data is to be scrambled, and this ensures compatibility with the CA system in the prior system.

It is apparent that those skilled in the art can make various modifications and variations to the present invention without departing from the spirit and scope of the present invention. The present invention is intended to cover these modifications and variations provided that they fall in the scope of protection defined by the following claims or their equivalents.

## Claims

1. A method for scrambling media data in real time, comprising:
acquiring scrambling associated data including an ECM and sending it to scrambling components based on media data to be scrambled, wherein multiple components that scramble the same media data share the same scrambling associated data; and
scrambling, by the scrambling components, media data in real time by using the scrambling associated data.

2. The method of claim 1, further comprising: judging whether the scrambling associated data exists before acquiring the data; if the scrambling associated data already exists, sending the existing scrambling associated data to the scrambling components; otherwise, generating and storing the scrambling associated data.

3. The method of claim 2, wherein an ECMG performs the judgment and generates the ECM after determining that the scrambling associated data does not exist; or
a scrambling agent performs the judgment and acquires the ECM, generates and stores the scrambling associated data after determining that the scrambling associated data does not exist.

4. The method of claim 3, wherein the ECMG or the scrambling agent judges whether the scrambling associated data exists based a the Service ID; or it judges whether the scrambling associated data exists based on the CW of the media data, wherein the scrambling components use the same CW for scrambling the same media data.

5. The method of claim 4, wherein the scrambling agent generates the CW based on the media data and requests the ECM from the ECMG based on the CW after determining that the scrambling associated data does not exist.

6. The method of claim 4, wherein the scrambling associated data is sent to apparatuses for distributing data, and the apparatuses forward the data to the scrambling components; or
the scrambling associated data is sent to the apparatuses for distributing data that correspond to the scrambling components requiring the data, and the apparatuses forward the data to the scrambling components;

7. The method of claim 6, wherein the scrambling associated data also includes time segments in which the scrambling components scramble media data, and the apparatuses for distributing data send the scrambling associated data to the scrambling components in the time segments or the apparatuses notify the scrambling components to start or stop scrambling media data based on the time segments.

8. The method of claim 7, wherein the apparatuses for distributing data disconnect from the scrambling components and maintain a connection between the scrambling agent and the ECMG when stopping sending the scrambling associated data to the scrambling components; or the apparatuses release the connection between the scrambling agent and the ECMG at the same time.

9. An apparatus for providing scrambling associated data, comprising:
a communication unit, adapted to receive information related to media data to be scrambled and send scrambling associated data;
a processing unit, adapted to generate an ECM according to the information related to the media data, or acquire an ECM from other apparatuses, and generate the scrambling associated data based on the ECM and the information related to media data; and
a first judging unit , adapted to notify the communication unit to send the scrambling associated data to the scrambling components when determining that multiple scrambling components scramble the media data.

10. The apparatus of claim 9, further comprising:
a storage unit, adapted to store the scrambling associated data generated by the processing unit;
a secondary judging unit, adapted to judge whether the storage unit has corresponding scrambling associated data based on the information related to the media data to be scrambled; wherein if yes, the secondary judging unit reads the scrambling associated data and sends it to the communication unit; otherwise, the secondary judging unit notifies the processing unit to generate scrambling associated data.

11. The apparatus of claim 9 or claim 10, wherein the generating unit generates a CW based on a Service ID and generates the ECM based on the CW.

12. An apparatus for distributing scrambling associated data, comprising:
a receiving unit, adapted to receive scrambling associated data of media data;
a replicating unit, adapted to replicate scrambling associated data after determining that multiple scrambling components scramble the media data; and
a forwarding unit, adapted to send the scrambling associated data to the corresponding scrambling components.

13. The apparatus of claim 12, wherein the forwarding unit is further adapted to send the scrambling associated data to the scrambling components in time segments in which the scrambling components scramble media data; or the forwarding unit is further adapted to notify the scrambling components to start or stop scrambling media data based on the time segments.

14. A system for scrambling media data, comprising:
scrambling components, adapted to scramble media data based on scrambling associated data, which includes at least an ECM of the media data;
an ECMG, adapted to generate a corresponding ECM based on media data; and
a scrambling agent, adapted to acquire the corresponding ECM from the ECMG based on the media data to be scrambled and send the scrambling associated data including the ECM to the scrambling components, wherein the scrambling same associated data is sent to the multiple scrambling components that scramble the same media data.

15. The system of claim 14, further comprising:
an apparatus for distributing data, adapted to receive scrambling associated data sent by the scrambling agent and send the data to the scrambling components.

16. The system of claim 15, wherein the apparatus for distributing data is further adapted to send the scrambling associated data to the scrambling components in time segments in which the scrambling components scramble media data; or the apparatus is further adapted to notify the scrambling components to start or stop scrambling media data based on the time segments.

17. The system of claim 14, 15 or 16, wherein the scrambling agent and the ECMG are independent entities, or the scrambling agent is integrated in the ECMG.
